(19) Europäisches Patentamt
European Patent Office
Office européen des brevets

(11) Veröffentlichungsnummer: **0 174 277**
**B1**

(12) # EUROPÄISCHE PATENTSCHRIFT

(45) Veröffentlichungstag der Patentschrift: **06.04.88**

(51) Int. Cl.⁴: **C 09 K 15/14**, C 09 K 15/28, C 07 C 148/00

(21) Anmeldenummer: **85810391.4**

(22) Anmeldetag: **28.08.85**

(54) **Antioxidantien für organisches Material.**

(30) Priorität: **03.09.84 CH 4203/84**

(43) Veröffentlichungstag der Anmeldung: **12.03.86 Patentblatt 86/11**

(45) Bekanntmachung des Hinweises auf die Patenterteilung: **06.04.88 Patentblatt 88/14**

(84) Benannte Vertragsstaaten: **DE FR GB IT**

(56) Entgegenhaltungen:
**EP-A-0 035 473**
**DE-A-2 059 916**
**DE-A-2 102 984**
**DE-A-2 902 298**
**GB-A-1 396 469**
**GB-A-2 053 913**
**US-A-3 832 328**

(73) Patentinhaber: **CIBA- GEIGY AG, Klybeckstrasse 141, CH- 4002 Basel (CH)**

(72) Erfinder: **Evans, Samuel, Dr., Route des Charbonnières 17, CH- 1723 Marly (CH)**

**EP 0 174 277 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die vorliegende Erfindung betrifft neue Zusammensetzungen schwefelhaltiger Phenole, ein Verfahren zu deren Herstellung, sowie die Verwendung dieser Gemische als Stabilisatoren für organisches Material.

Organische Verbindungen wie Kunststoffe oder Harze sowie Schmiermittel unterliegen thermischem, oxidativem oder lichtinduziertem Abbau. In der Technik ist eine grosse Anzahl von Stabilisatoren für eine Vielzahl von Substraten bekannt. Die Wirksamkeit eines Stabilisators hängt unter anderem von der Art des Substrats, in welchem er eingesetzt wird, und vom jeweiligen Abbaumechanismus ab.

Es ist also im allgemeinen schwierig, für eine konkrete Anwendung den wirksamsten und ökonomischsten Stabilisator anzugeben.

So kann beispielsweise ein Stabilisator, der die Flüchtigkeit einer Verbindung reduziert, dahingehend wirken, dass er einen Bindungsbruch der Substratmoleküle verhindert. Um eine geringe Versprödung oder die Erhaltung der Elastizität eines Polymeren oder eines Elastomeren zu gewährleisten, kann von einem Stabilisator verlangt werden, dass er übermässige Vernetzungsreaktionen und/oder Kettenbruch verhindert. Um die Vergilbung eines Substrats zu unterbinden, muss verhindert werden, dass Reaktionen des Substrats oder des Stabilisators ablaufen, die zu neuen Chromophoren führen. Weiterhin müssen Probleme der Verarbeitungsstabilität und der Substratverträglichkeit beachtet werden.

Ausserdem sind in vielen Anwendungen Kombinationen von Eigenschaften erwünscht wie beispielsweise Antioxidans- und Antiverschleisswirkung.

Überraschenderweise ist jetzt gefunden worden, dass Gemische spezieller schwefelhaltiger Phenole eine ungewöhnliche Kombination wünschenswerter Eigenschaften besitzen.

Die erfindungsgemässen Zusammensetzungen erweisen sich als besonders nützliche Stabilisatoren für Polyolefine, schlagfestes Polystyrol, Elastomere, bei denen der Erhalt der Elastizität, die Verhinderung von Vernetzungsreaktionen, von Verfärbung, von Geruchsbildung und von Ausschwitzen des Stabilisators grundlegende Anforderungen an die Qualität eines Stabilisators darstellen.

Ausserdem sind die erfindungsgemässen Zusammensetzungen flüssig und somit aus gewerbehygienischer Sicht leicht zu handhaben.

Ferner lassen sich diese Zusammensetzungen als Antioxidantien und EP/AW-Wirkstoffe in Schmiermitteln einsetzen und besitzen somit eine Kombination von Eigenschaften, die in diesem Verwendungsbereich gefragt ist.

Schwefelhaltige sterisch gehinderte Phenole werden in der DE-OS 2,329,494 beschrieben. Die Verbindungen enthalten einen Thiiranring und werden als Stabilisatoren für organische Substrate eingesetzt.

In der US-PS 4,064,158 wird die Herstellung von Organomercaptophenolen beschrieben. Dabei werden ein Phenol elementarer Schwefel und ein aktiviertes Olefin bzw. eine Epoxyverbindung in Gegenwart einer Base und eines Lösungsmittels mit hoher Dielektrizitätskonstante miteinander reagieren gelassen. Als aktivierte Olefine werden Verbindungen eingesetzt, die mindestens eine elektronenziehende Gruppe in direkter Nachbarschaft zur Doppelbindung tragen. Die so erhaltenen Organomercaptophenole werden als Edukte bei der Synthese von Estern, Carbonaten, Ethern und Epoxiden eingesetzt und finden zusätzlich Verwendung als Antioxidantien.

Die vorliegende Erfindung betrifft Stoffgemische erhältlich durch Umsetzung von elementarem Schwefel mit Verbindungen der Formel I

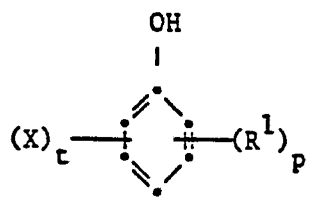 (I),

worin $R^1$ $C_1$-$C_{12}$Alkyl, $C_5$-$C_7$Cycloalkyl, Phenyl, 1- oder 2-Naphthyl, $C_7$-$C_9$Aralkyl oder $C_7$-$C_9$Alkaryl ist, t 1, 2 oder 3 ist, p 0, 1 oder 2 bedeutet, worin X eine der Gruppen

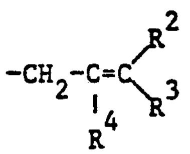 oder $-C_xH_{2x}-Y-R^5$

bedeutet, wobei $R^2$, $R^3$ und $R^4$ unabhängig voneinander Wasserstoff oder Methyl sind, worin x 0, 1, 2 oder 3 ist, Y -CO-O- oder -CO-NH- bedeutet, und worin $R^5$ ein Rest

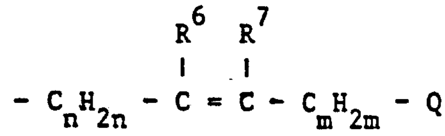

ist, worin n und m unabhängig voneinander die ganzzahligen Werte von 0 bis 14 annehmen können, $R^6$ und $R^7$ Wasserstoff oder $C_1$-$C_8$-Alkyl bedeuten, Q Wasserstoff, Methyl oder ein Rest

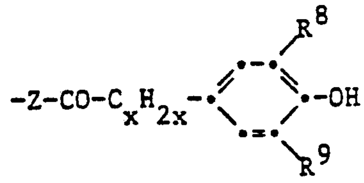

ist, worin Z -O- oder -NH- bedeutet, und worin $R^8$ und $R^9$ unabhängig voneinander die Bedeutungen von $R^1$ besitzen oder Wasserstoff sind, wobei man 100 Gewichtsteile einer Verbindung der Formel I oder von Gemischen dieser Verbindungen mit 5 bis 1000 Gewichtsteilen elementarem Schwefel bei einer Reaktionstemperatur von 50° C bis 200° C umsetzt.

$R^1$, $R^8$ und $R^9$ bedeuten als $C_1$-$C_{12}$Alkyl beispielsweise Methyl, Ethyl, n-Propyl, Isopropyl, n-Butyl, sek.Butyl, tert.Butyl, n-Pentyl, Isoamyl, n-Hexyl, 1,1-Dimethylbutyl, n-Heptyl, n-Octyl, 2-Ethylhexyl, 1,1,3,3-Tetramethylbutyl, n-Nonyl, n-Decyl, n-Undecyl, n-Dodecyl oder 1,1,3,3,5,5-Hexamethylhexyl.

$R^1$, $R^8$ und $R^9$ bedeuten vorzugsweise $C_3$-$C_{12}$Alkyl und sind dann beispielsweise Isopropyl, sek.Butyl, tert.Butyl, Isoamyl, 1,1-Dimethylbutyl, 2-Ethylhexyl, 1,1,3,3-Tetramethylbutyl oder 1,1,3,3,5,5-Hexamethylhexyl. Besonders bevorzugt werden $R^1$, $R^8$ und $R^9$ als tert. Butyl.

In einer weiteren bevorzugten Ausführungsform befindet sich $R^1$ als tert.Butyl in o-Position zur Hydroxygruppe des Phenylringes, wobei der Index p entweder 1 oder 2 ist.

Als $C_5$-$C_7$Cycloalkyl bedeuten $R^1$, $R^8$ oder $R^9$ beispielsweise Cyclopentyl, Cyclohexyl oder Cycloheptyl. Bevorzugt wird Cyclohexyl.

Als $C_7$-$C_9$Aralkyl bedeuten $R^1$, $R^8$ oder $R^9$ beispielsweise Benzyl, α-Methylbenzyl oder α,α-Dimethylbenzyl. Besonders bevorzugt wird Benzyl.

Als $C_7$-$C_9$Alkaryl bedeuten $R^1$, $R^8$ oder $R^9$ beispielsweise o-, m-oder p-Tolyl, 2,3-, 2,4-, 2,5-, 2,6-, 3,4- oder 3,5-Dimethylphenyl, sowie 2,3,4-, 2,3,5-, 2,3,6-, 2,4,5-, 2,4,6-, 2,5,6- oder 3,4,5-Trimethylphenyl.

Bevorzugt wird o-, m- oder p-Tolyl.

$R^2$, $R^3$ und $R^4$ sind vorzugsweise Wasserstoff.

Y ist vorzugsweise eine Gruppe -CO-O-.

Die Indizes m und n sind unabhängig voneinander 1 oder 7 bzw. 8.

$R^6$ und $R^7$ als $C_1$-$C_8$Alkyl sind beispielsweise Methyl, Ethyl, n-Propyl, Isopropyl, n-Butyl, sek.Butyl, tert.Butyl, n-Pentyl, Isoamyl, n-Hexyl, n-Heptyl oder n-Octyl.

Bevorzugt werden geradkettige $C_1$-$C_8$Alkylreste. Ganz besonders bevorzugt wird Methyl. $R^6$ und $R^7$ sind vorzugsweise Wasserstoff oder Methyl. Ganz besonders bevorzugt jedoch ist Wasserstoff.

Q ist vorzugsweise Wasserstoff oder Methyl oder auch ein Rest

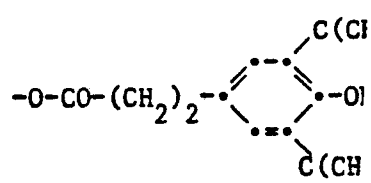

Z ist vorzugsweise -O-.

Bevorzugt werden Stoffgemische erhältlich durch Umsetzung von elementarem Schwefel mit Verbindungen der Formel I, worin X ein Rest

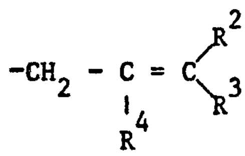

bedeutet.

Ebenfalls bevorzugt werden Stoffgemische erhältlich durch Umsetzung von elementarem Schwefel mit Verbindungen der Formel I, worin X ein Rest

$-C_xH_{2x} - Y - R^5$

bedeutet.

Ganz besonders bevorzugt werden Stoffgemische erhältlich durch Umsetzung von elementarem Schwefel mit Verbindungen der Formel I, worin $R^1$ verzweigtes $C_3$-$C_{12}$ Alkyl ist, p 1 oder 2 bedeutet, wobei sich $R^1$ jeweils in o-Position zur Hydroxygruppe des Phenylringes befindet, t 1 ist, wobei sich X in p-Position zur Hydroxygruppe des Phenylringes befindet, worin X ein Rest

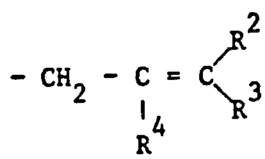

bedeutet, $R^2$, $R^3$ und $R^4$ unabhängig voneinander Wasserstoff oder Methyl sind.

Ebenfalls von Interesse sind Stoffgemische erhältlich durch Umsetzung von elementarem Schwefel mit Verbindungen der Formel I, worin $R^1$ tert.Butyl ist, das sich in o-Position zur Hydroxygruppe des Phenylringes befindet, p 2 bedeutet, t 1 ist und X $-CH_2CH=CH_2$ ist, das sich in p-Position zur Hydroxygruppe des Phenylringes befindet.

Auch von Interesse sind Stoffgemische erhältlich durch Umsetzung von elementarem Schwefel mit Verbindungen der Formel I, worin $R^1$ verzweigtes $C_3$-$C_{12}$ Alkyl ist, p 1 oder 2 bedeutet, wobei $R^1$ sich in o-Position zur Hydroxygruppe des Phenylringes befindet, worin t 1 ist und X ein Rest $-C_xH_{2x}$-Y-$R^5$ bedeutet, der sich in p-Position zur Hydroxygruppe des Phenylringes befindet, worin x 2 bedeutet und Y -CO-O- ist, worin $R^5$ einen Rest

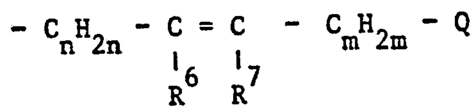

bedeutet, worin n 8 ist und m 7 ist, $R^6$ und $R^7$ unabhängig voneinander Wasserstoff oder Methyl bedeuten und worin schliesslich Q Wasserstoff oder Methyl ist.

Ebenfalls bevorzugt werden Stoffgemische erhältlich durch Umsetzung von elementarem Schwefel mit Verbindungen der Formel I, worin $R^1$ tert.Butyl ist, das sich in o-Position zur Hydroxygruppe des Phenylringes befindet, worin p 2 ist, t 1 bedeutet und X ein Rest $-C_xH_{2x}$-Y-$R^5$ bedeutet, der sich in p-Position zur Hydroxygruppe des Phenylringes befindet, worin x 2 ist, Y -CO-O- bedeutet, $R^5$ ein Rest

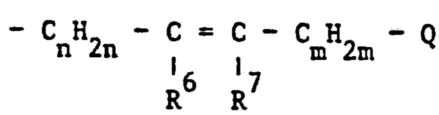

ist, worin m 8 und n 7 bedeutet, $R^6$ und $R^7$ Wasserstoff sind und schliesslich Q Methyl bedeutet, oder wobei m gleich 0, n die Zahl 1 und $R^6$, $R^7$ und Q Wasserstoff bedeuten.

Ganz besonders bevorzugt werden Stoffgemische erhältlich durch Umsetzung von elementarem Schwefel mit Verbindungen der Formel I, worin $R^1$ tert.Butyl ist, das sich in o-Position zur phenolischen Hydroxygruppe befindet, worin p 2 ist, t 1 bedeutet und X ein Rest $-C_xH_{2x}$-Y-$R^5$ ist, der sich in p-Position zur phenolischen Hydroxygruppe befindet, worin x 2 ist, Y -CO-O ist, $R^6$ und $R^7$ Wasserstoff bedeutet und worin Q ein Rest

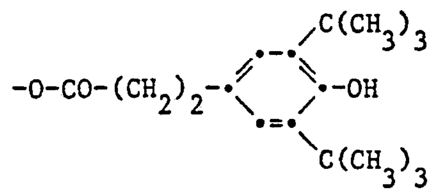

ist.

Als Ausgangsprodukte zur Herstellung der erfindungsgemässen Stoffgemische lassen sich beispielsweise folgende Vertreter von Verbindungen der Formel I einsetzen:

2-Allylphenol
4-Allylphenol
2-Methyl-4-allylphenol
2-Ethyl-4-allylphenol
2-Isopropyl-4-allylphenol
2-n-Butyl-4-allylphenol
2-tert.Butyl-4-allylphenol
2-(2-Ethylhexyl)-4-allylphenol
2-n-Dodecyl-4-allylphenol
2-Cyclohexyl-4-allylphenol
2-Phenyl-4-allylphenol
2-Benzyl-4-allylphenol
2-p-Tolyl-4-allylphenol
2,5-Dimethyl-4-allylphenol
2,5-Di-tert.butyl-4-alkylphenol
2,5-Di-(2-ethylhexyl)-4-allylphenol
2,5-Di-n-dodecyl-4-allylphenol
2,5-Di-cyclohexyl-4-allylphenol
2,5-Di-phenyl-4-allylphenol
2,5-Di-benzyl-4-allylphenol
2,5-Di-p-tolyl-4-allylphenol
2,5-Di-tert.butyl-4-(2-methylallyl)-phenol
2,5-Di-tert.butyl-4-(but-2-enyl)-phenol
2,5-Di-tert.butyl-4-(3-methylbut-2-enyl)-phenol
2,5-Di-tert.butyl-4-(2,3-dimethylbut-2-enyl)-phenol
1,4-Di-(3,5-di-tert.butyl-4-hydroxyphenyl)-but-2-en
Ester des But-2-enols mit 4-Hydroxy-3,5-di-tert.butylbenzoesäure
N-But-2-enylamid der 4-Hydroxy-3,5-di-tert.butylbenzoesäure
Diester des 1,4-But-2-endiol mit 4-Hydroxy-3,5-di-tert.-butylbenzoesäure
Diamid des 1,4-Diaminobut-2-ens mit 4-Hydroxy-3,5-di-tert. butylbenzoesäure
Ester des But-2-enols mit 4-Hydroxy-3,5-di-tert.butylbenzylcarbonsäure.

Die Umsetzung der Verbindung der Formel I mit elementarem Schwefel erfolgt in Gegenwart oder in Abwesenheit eines Lösungsmittels und gegebenenfalls in Anwesenheit einer Base. Man setzt 5 bis 1000 Teile Schwefel auf 100 Teile Verbindung der Formel I ein. Bevorzugt werden 10 bis 300 Gewichtsteile Schwefel. Als Lösungsmittel lassen sich aromatische oder aliphatische Kohlenwasserstoffe verwenden, wie beispielsweise Benzol, Toluol, Xylole, n-Hexan oder Ligroin. Die Reaktion kann aber auch in nitrierten oder chlorierten Kohlenwasserstoffen durchgeführt werden. Beispiele hierfür sind Chlorbenzol oder Nitrobenzol. Es können auch aprotische Lösungsmittel wie beispielsweise Dimethylformamid verwendet werden.

Verwendet man bei der Umsetzung mit Schwefel eine Base, so setzt man diese in einer Menge von 0,1 - 20 Mol.-% (bezogen auf das Reaktionsgemisch) zu.

Bei dieser Base handelt es sich beispielsweise um ein Alkali- oder Erdalkalihydroxid, um ein Alkalialkoholat oder -phenolat oder um ein Amin. Beispiele dafür sind Natrium-, Kalium-, Lithium, Magnesium- oder Calziumhydroxid, sowie Natriummethanolat, -ethanolat oder -phenolat oder Mono-, Di- oder Triethylamin oder Anilin.

Die Reaktionstemperatur beträgt je nach Umsetzung zwischen 50°C und 200°C, bevorzugt zwischen 120°C und 190°C.

Die Erfindung betrifft daher auch ein Verfahren zum Herstellen von Stoffgemischen, dadurch gekennzeichnet, dass man 100 Teile von Verbindungen der Formel I oder von Gemischen dieser Verbindungen mit 5 bis 1000 Gewichtsteilen elementarem Schwefel in An- oder Abwesenheit eines organischen Lösungsmittels und gegebenenfalls einer Base umsetzt, wobei die Reaktionstemperatur zwischen 50°C und 200°C beträgt.

In einer bevorzugten Ausführungsform dieses Verfahrens geht man von Verbindungen der Formel

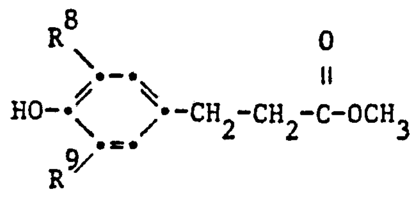

(II)

aus.

Diese Verbindungen sind im Handel erhältlich oder mit Hilfe von dem Fachmann geläufigen Standardreaktionen leicht herstellbar.

Die Verbindungen der Formel II werden mit einem ungesättigten Alkohol R'-OH in Gegenwart einer Base umgesetzt. Als Umesterungsprodukt erhält man Verbindungen der Formel I. Als Basen lassen sich beispielsweise Kalium- oder Natriumhydroxid, Lithiumamid oder Lithiumhydrid verwenden. Die Umesterung erfolgt in An- oder Abwesenheit eines Lösungsmittels.

Als Lösungsmittel lassen sich beispielsweise verwenden: Toluol, Xylol, Chlorbenzol oder Ligroin. Die Reaktionstemperatur beträgt je nach Umsetzung zwischen 80°C und 180°C. Das so erhaltene Ausgangsprodukt wird dann in der oben beschriebenen Weise zusammen mit Schwefel weiter umgesetzt.

Das Endprodukt ist ein kompliziertes Gemisch verschiedener Stoffe. Vermutlich erfolgt eine Addition des Schwefels an die Doppelbindung. Gebundener Schwefel lässt sich mit Hilfe der MR-Spektroskopie nachweisen.

Ein besonders bevorzugtes Endprodukt entsteht durch die Umsetzung der Verbindung der Formel III

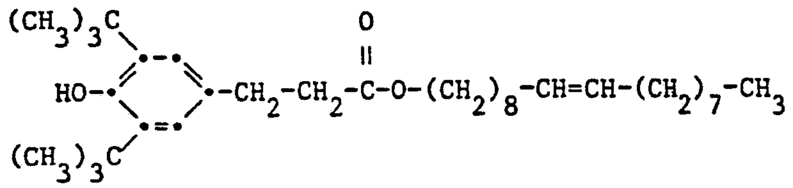

(III)

mit Schwefel. Das Endprodukt enthält 14,4 % chemisch gebundenen Schwefel. Das Ausgangsprodukt stellt man bevorzugt durch Umesterung einer Verbindung der Formel II mit einem Octadec-9-enol nach dem oben beschriebenen Verfahren her.

Ein weiterer Gegenstand der vorliegenden Erfindung betrifft Zusammensetzungen enthaltend ein gegen thermischen, oxidativen oder strahlungsinduzierten Abbau empfindliches organisches Material und als Stabilisator ein durch die oben beschriebene Umsetzung gekennzeichnetes Stoffgemisch.

Bevorzugt werden Zusammensetzungen, worin das organische Material ein Polymeres, insbesondere ein Elastomeres, bedeutet. Als Elastomere werden insbesondere bevorzugt:

Polydiene, wie beispielsweise Polybutadien, Polyisopren oder Polychloropren; Blockpolymere, wie beispielweise Styrol/-Butadien/Styrol, Styrol/Isopren/Styrol oder Styrol/Ethylen-Propylen/Styroltypen; sowie Acrylnitril Polymere.

Diese Polymere können auch in Form von Latices vorliegen und können als solche stabilisiert sein.

Ebenfalls bevorzugt werden Zusammensetzungen, worin das organische Material ein synthetischer Schmierstoff oder ein Schmierstoff auf Mineralölbasis ist.

Die in Frage kommenden Schmierstoffe sind dem Fachmann geläufig und z. B. im "Schmiermittel Taschenbuch (Hüthig Verlag Heidelberg, 1974)" beschrieben.

Ein weiterer Gegenstand der Erfindung ist die Verwendung oben beschriebenen Gemische als Stabilisatoren für organisches Material gegen dessen Schädigung durch Einwirkung von Sauerstoff, Wärme, Licht und energiereiche Strahlung.

Bevorzugt ist die Verwendung der Gemische als Antioxidantien in organischen Polymeren besonders in Elastomeren, oder die Verwendung in Mineralölen oder synthetischen Ölen.

Die erfindungsgemässen Stoffgemische eignen sich insbesondere auch als EP/AW Zusätze für Schmierstoffe oder als Zusätze für Metallbearbeitungsflüssigkeiten.

Weitere Beispiele für organisches Material, welches mit den erfindungsgemässen Stoffgemischen vorteilhaft stabilisiert werden kann, sind:

1. Polymere von Mono- und Diolefinen, beispielsweise Polyethylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z. B. von Cyclopenten oder Norbornen.

2. Mischungen der unter 1) genannten Polymeren, z. B. Mischungen von Polypropylen mit Polyisobutylen.

3. Copolymere von Mono- und Diolefinen untereinander oder mit anderen Vinylmonomeren, wie z. B. Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.

4. Polystyrol, Poly-(p-methylstyrol).

5. Copolymere von Styrol oder α-Methylstyrol mit Dienen oder Acrylderivaten, wie z. B. Styrol-Butadien, Styrol-Acrylnitril, Styrol-Alkylmethacrylat, Styrol-Maleinanhydrid, Styrol-Acrylnitril-Methylacrylat; Mischungen von hoher Schlagzähigkeit aus Styrol-Copolymeren und einem anderen Polymer wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol, wie z. B. Styrol auf Polybutadien, Styrol und Acrylnitril auf Polybutadien, Styrol und Maleinsäureanhydrid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril suf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z. B. als sogenannte ABS, MBS, ASA oder AES-Polymere bekannt sind.

7. Halogenhaltige Polymere, wie z. B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere wie Vinylchlorid-Vinylidenchlorid, Vinylchlorid-Vinylacetat oder Vinylidenchlorid-Vinylacetat.

8. Polymere, die sich von α,β-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere die sich von ungesättigten Alkoholen und Aminen bzw. deren Acylderivaten oder Acetalen ableiten wie Polyvinylalkohol, Polyvinylacetat-, -stearat, -benzoat, -maleat, Polyvinylbutyral, Polyallylphthalat, Polyallylmelamin.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere wie z. B. Ethylenoxid enthalten.

13. Polyphenyloxide und -sulfide und deren Mischungen mit Styrolpolymeren.

14. Polyurethane, die sich von Polyethern, Polyestern und Polybutadienen mit endständigen Hydroxylgruppen einerseits und aliphatischen oder aromatischen Polyisocyanaten andererseits ableiten sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexa-methylenterephthalamid, Poly-m-phenylenisophthalamid, sowie deren Block-Copolymere mit Polyethern wie z. B. mit Polyethylenglykol, Polypropylenglykol oder Polytetramethylenglykol.

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten wie z. B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten, oder Epoxidharzen vernetzt sind.

25. Vernetzte Epoxidharze, die sich von Polyepoxiden ableiten, z. B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie

Methylcellulose.

27. Mischungen (Polyblends) der vorgenannten Polymeren wie z. B. PP/EPDM, Polyamid 6/EPDM oder ABS, PVC/EVA, PVC/ABS, PVC/MBS, PC/ABS, PBTP/ABS.

28. Natürliche und synthetische organische Stoffe, die reine monomere Verbindungen oder Mischungen von solchen darstellen, beispielsweise Mineralöle, tierische oder pflanzliche Fette, Öle und Wachse, oder Öle, Wachse und Fette auf Basis synthetischer Ester (z. B. Phthalate, Adipate, Phosphate oder Trimellithate), sowie Abmischungen synthetischer Ester mit Mineralölen in beliebigen Gewichtsverhältnissen, wie sie z. B. als Spinnpräparationen Anwendung finden, sowie deren wässrigen Emulsionen.

29. Wässrige Emulsionen natürlicher oder synthetischer Kautschuke, wie z. B. Naturkautschuk-Latex oder Latices von carboxylierten Styrol-Butadien-Copolymeren.

Die Stabilisatorgemische werden den Kunststoffen bzw. den Schmiermitteln in einer Konzentration von 0.01-10 Gew.-% berechnet auf das zu stabilisierende Material zugesetzt. Vorzugsweise werden 0,05 bis 5,0 Gew.-%, besonders bevorzugt 0,1 bis 2,0 Gew.-% der Gemische, berechnet auf das zu stabilisierende Material, in dieses eingearbeitet.

Die Einarbeitung kann beispielsweise durch Einmischen der Stabilisatorgemische und gegebenenfalls weiterer Additive nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels erfolgen. Die neuen Stabilisatorgemische können auch in Form eines Masterbatches, der diese Gemische beispielsweise in einer Konzentration von 2,5 bis 25 Gew.-% enthält, den zu stabilisierenden Kunststoffen zugesetzt werden.

Im Falle von vernetztem Polyethylen werden die Stabilisatoren vor der Vernetzung beigefügt.

Die so stabilisierten Materialien können in verschiedenster Form angewendet werden, z. B. als Folien, Fasern, Bändchen, Formmassen, Profile oder als Bindemittel für Lacke, Klebstoffe oder Kitte.

In der Praxis können die erfindungsgemässen Stabilisatorgemische zusammen mit anderen Stabilisatoren eingesetzt werden.

Schmierstoff-Formulierungen können zusätzlich noch andere Additive enthalten, die zugegeben werden, um gewisse Gebrauchseigenschaften zu verbessern, wie z. B. weitere aminische Antioxidantien, Metallpassivatoren, Rostinhibitoren, Viskositäts-Index-Verbesserer, Stockpunkterniedriger, Dispergiermittel/Tenside und Verschleisschutzadditive.

Als weitere Additive, mit denen zusammen die erfindungsgemäss verwendeten Stabilisatorgemische eingesetzt werden können, sind beispielsweise zu nennen:

1. <u>Antioxidantien</u>

1.1. <u>Alkylierte Monophenole</u>

2,6-Di-tert.butyl-4-methylphenol
2-Tert.butyl-4,6-dimethylphenol
2,6-Di-tert.butyl-4-ethylphenol
2,6-Di-tert.butyl-4-n-butylphenol
2,6-Di-tert.butyl-4-i-butylphenol
2,6-Di-cyclopentyl-4-methylphenol
2-(α-Methylcyclohexyl)-4,6-dimethylphenol
2,6-Di-octadecyl-4-methylphenol
2,4,6-Tri-cyclohexylphenol
2,6-Di-tert.butyl-4-methoxymethylphenol

1.2. <u>Alkylierte Hydrochinone</u>

2,6-Di-tert.butyl-4-methoxyphenol
2,5-Di-tert.butyl-hydrochinon
2,5-Di-tert.amyl-hydrochinon
2,6-Diphenyl-4-octadecyloxyphenol

1.3. <u>Hydroxylierte Thiodiphenylether</u>

2,2'-Thio-bis-(6-tert.butyl-4-methylphenol)
2,2'-Thio-bis-(4-octylphenol)
4,4'-Thio-bis-(6-tert.butyl-3-methylphenol)
4,4'-Thio-bis-(6-tert.butyl-2-methylphenol)

1.4. <u>Alkyliden-Bisphenole</u>

2,2'-Methylen-bis-(6-tert.butyl-4-methylphenol)
2,2'-Methylen-bis-(6-tert.butyl-4-ethylphenol)
2,2'-Methylen-bis-[4-methyl-6-(α-methylcyclohexyl)-phenol]
2,2'-Methylen-bis-(4-methyl-6-cyclohexylphenol)
2,2'-Methylen-bis-(6-nonyl-4-methylphenol)
2,2'-Methylen-bis-(4,6-di-tert.butylphenol)
2,2'-Ethyliden-bis-(4,6-di-tert.butylphenol)

2,2'-Ethyliden-bis-(6-tert.butyl-4-isobutylphenol)
2,2'-Methylen-bis-[6-(α-methylbenzyl)-4-nonylphenol]
2,2'-Methlyen-bis-[6-(α,α-dimethylbenzyl)-4-nonylphenol]
4,4'-Methylen-bis-(2,6-di-tert.butylphenol)
4,4'-Methylen-bis-(6-tert.butyl-2-methylphenol)
1,1-Bis-(5-tert.butyl-4-hydroxy-2-methylphenyl)-butan
2,6-Di-(3-tert.butyl-5-methyl-2-hydroxybenzyl)-4-methylphenol
1,1,3-Tris-(5-tert.butyl-4-hydroxy-2-methylphenyl)-butan
1,1-Bis-(5-tert.butyl-4-hydroxy-2-methylphenyl)-3-n-dodecylmercaptobutan
Ethylenglycol-bis-[3,3-bis-(3'-tert.butyl-4'-hydroxyphenyl)-butyrat]
Di-(3-tert.butyl-4-hydroxy-5-methylphenyl)-dicyclopentadien
Di-[2-(3'-tert.butyl-2'-hydroxy-5'-methyl-benzyl)-6-tert.butyl-4-methyl-phenyl]-terephthalat.

1.5 Benzylverbindungen
1,3,5-Tri-(3,5-di-tert.butyl-4-hydroxybenzyl)-2,4,6-trimethylbenzol
Di-(3,5-di-tert.butyl-4-hydroxybenzyl)-sulfid
3,5-di-tert.butyl-4-hydroxybenzyl-mercaptoessigsäure-isooctylester
Bis-(4-tert.butyl-3-hydroxy-2,6-dimethylbenzyl)dithiol-terephthalat
1,3,5-Tris-(3,5-di-tert.butyl-4-hydroxybenzyl)-isocyanurat
1,3,5-Tris-(4-tert.butyl-3-hydroxy-2,6-dimethylbenzyl)-isocyanurat
3,5-Di-tert.butyl-4-hydroxybenzyl-phosphonsäure-dioctadecylester
3,5-Di-tert.butyl-4-hydroxybenzyl-phosphonsäure-monoethylester, Calcium-salz.

1.6. Acylaminophenole
4-Hydroxy-laurinsäureanilid
4-Hydroxy-stearinsäureanilid
2,4-Bis-octylmercapto-6-(3,5-di-tert.butyl-4-hydroxyanilino)-s-triazin
N-(3,5-di-tert.butyl-4-hydroxyphenyl)-carbaminsäureoctylester.

1.7. Ester der β-(3,5-Di-tert.butyl-4-hydroxyphenyl)-propionsäure mit ein- oder mehrwertigen Alkoholen, wie z. B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.8. Ester der β-(5-tert.butyl-4-hydroxy-3-methylphenyl)-propion-säure mit ein- oder mehrwertigen Alkoholen, wie z. B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.9. Amide der β-(3,5-Di-tert.butyl-4-hydroxyphenyl)-propionsäure, wie z. B.
N,N'-Di-(3,5-di-tert.butyl-4-hydroxyphenylpropionyl)-hexamethylen-diamin
N,N'-Di-(3,5-di-tert.butyl-4-hydroxyphenylpropionyl)-trimethylen-diamin
N,N'-Di-(3,5-di-tert.butyl-4-hydroxyphenylpropionyl)-hydrazin

1.10. Aminische Antioxidantien
N,N'-Di-isopropyl-p-phenylendiamin
N,N'-Di-sec.-butyl-p-phenylendiamin
N,N'-Bis(1,4-dimethyl-pentyl)-p-phenylendiamin
N,N'-Bis(1-ethyl-3-methyl-pentyl)-p-phenylendiamin
N,N'-Bis(1-methyl-heptyl)-p-phenylendiamin
N,N'-Dicyclohexyl-p-phenylendiamin
N,N'-Diphenyl-p-phenylendiamin
N,N'-Di-(naphthyl-2-)-p-phenylendiamin
N-Isopropyl-N'-phenyl-p-phenylendiamin
N-(1,3-Dimethyl-butyl)-N'-phenyl-p-phenylendiamin
N-(1-Methyl-heptyl)-N'-phenyl-p-phenylendiamin

N-Cyclohexyl-N'-phenyl-p-phenylendiamin
4-(p-Toluol-sulfonamido)-diphenylamin
N,N'-Dimethyl-N,N'-di-sec.-butyl-p-phenylendiamin
Diphenylamin
4-Isopropoxy-diphenylamin
N-Phenyl-1-naphthylamin
N-Phenyl-2-naphthylamin
octyliertes Diphenylamin
4-n-Butylaminophenol
4-Butyrylamino-phenol
4-Nonanoylamino-phenol
4-Dodecanoylamino-phenol
4-Octadecanoylamino-phenol
Di-(4-methoxy-phenyl)-amin
2,6-Di-tert.-butyl-4-dimethylamino-methyl-phenol
2,4'-Diamino-diphenylmethan
4,4'-Diamino-diphenylmethan
N,N,N,N'-Tetramethyl-4,4'-diamino-diphenylmethan
1,2-Di-(phenylamino)-ethan
1,2-Di-[(2-methyl-phenyl)-amino]-ethan
1,3-Di-(phenylamino)-propan
(o-Tolyl)-biguanid
Di-[4-(1',3'-dimethyl-butyl)-phenyl]amin.

2. UV-Absorber und Lichtschutzmittel

2.1. 2-(2'-Hydroxyphenyl)-benztriazole, wie z. B. das 5'-Methyl-, 3',5'-Di-tert.butyl-, 5'-Tert.butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.

2.2. 2-Hydroxybenzophenone, wie z. B. das 4-Hydroxy-, 4-Methoxy-, 4-Octoxy-, 4-Decyloxy-, 4-Dodecyloxy-, 4-Benzyloxy-, 4,2',4'-Tri-hydroxy-, 2'-Hydroxy-4,4'-dimethoxy-Derivat.

2.3. Ester von gegebenenfalls substituierten Benzoesäuren, wie z. B. 4-Tert.butyl-phenylsalicylat Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, wie z. B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z. B. Nickelkomplexe des 2,2'-Thio-bis-[4-(1,1,3,3-tetramethylbutyl)-phenols], wie der 1 : 1- oder der 1 : 2-Komplex, gegebenenfalls mit zusätzlichen Liganden wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern wie vom Methyl- oder Ethylester, Nickelkomplexe von Ketoximen wie von 2-Hydroxy-4-methyl-phenyl-unde-cylketonoxim, Nickelkomplexe des 1-Phenyl-4-lauroyl-5-hydroxy-pyrazols, gegebenenfalls mit zusätzlichen Liganden.

2.6. Sterisch gehinderte Amine, wie z. B. Bis-(2,2,6,6-tetramethyl-piperidyl)-sebacat
Bis-(1,2,2,6,6-pentamethylpiperidyl)-sebacat
n-Butyl-3,5-di-tert.butyl-4-hydroxybenzyl-malonsäure-bis(1,2,2,6,6-pentamethylpiperidyl)-ester,
Kondensationsprodukt aus 1-Hydroxy-ethyl-2,2,6,6-tetramethyl-4-hydroxypiperidin und Bernsteinsäure, Kondensationsprodukt aus N,N'-(2,2,6,6-Tetramethyl-4-piperidyl)-hexamethylendiamin und 4-tert.Octylamino-2,6-dichlor-1,3,5-s-triazin,
Tris-(2,2,6,6-tetramethyl-4-piperidyl)-nitrilotriacetat,
Tetrakis-(2,2,6,6-tetramethyl-4-piperidyl)-1,2,3,4-butantetracarbonsäure,
1,1'-(1,2-Ethandiyl)-bis-(3,3,5,5-tetramethyl-piperazinon).

2.7. Oxalsäurediamide, wie z. B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyl-oxanilid und dessen Gemisch mit 2-Ethoxy-2'-ethyl-5,4'-di-tert.butyl-oxanilid, Gemische von ortho-und para-Methoxy- sowie von o- und p-Ethoxy-di-substituierte Oxaniliden.

3. Metalldesaktivatoren, wie z. B. N,N'-Diphenyloxalsäurediamid, N-Salicylal-N'-salicyloylhydrazin, N,N'-Bis-salicyloylhydrazin, N,N'-Bis-(3,5-di-tert.butyl-4-hydroxyphenylpropionyl)-hydrazin, 3-Salicyloylamino-1,2,4-

triazol, Bis-benzyliden-oxalsäuredihydrazid.

4. Phosphite und Phosphonite, wie z. B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit.

5. Peroxidzerstörende Verbindungen, wie z. B. Ester der β-Thio-dipropionsäure, beispielsweise der Lauryl-, Stearyl-, Myristyl- oder Tridecylester, Mercaptobenzimidazol, das Zinksalz des 2-Mercapto-benzimidazols, Zink-dibutyl-dithiocarbamat, Dioctadecyldisulfid, Pentaerythrit-tetrakis-(β-dodecylmercapto)-propionat.

6. Polyamidstabilisatoren, wie z. B. Kupfersalze in Kombination mit Jodiden und/oder Phosphorverbindungen und Salze des zweiwertigen Mangans.

7. Basische Co-Stabilisatoren, wie z. B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z. B. 4-tert.Butylbenzoesäure, Adipinsäure, Diphenylessigsäure.

9. Füllstoffe und Verstärkungsmittel, wie z. B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z. B. Weichmacher, Gleitmittel, Emulgatoren, Pigmente, Optische Aufheller, Flammschutzmittel, Antistatika, Treibmittel.

11. Metallpassivatoren:
für Kupfer, z. B.:
Benztriazol, Tetrahydrobenztriazol, 2-Mercaptobenzthiazol, 2,5-Dimercaptothiadiazol, Salicylidenpropylendiamin, Salze von Salicylaminoguanidin.

12. Rost-Inhibitoren:
a) Organische Säuren, ihre Ester, Metallsalze und Anhydride, z. B.:
N-Oleoyl-sarcosin, Sorbitan-mono-oleat, Blei-naphthenat, Dodecenylbernsteinsäure-anhydrid, Alkenylbernsteinsäure-Halbester, 4-Nonylphenoxy-essigsäure.
b) Stickstoffhaltige Verbindungen, z. B.:
I. Primäre, sekundäre oder tertiäre aliphatische oder cycloaliphatische Amine und Amin-Salze von organischen und anorganischen Säuren, z. B. öllösliche Alkylammoniumcarboxylate.
II. Heterocyclische Verbindungen z. B.:
Substituierte Imidazoline und Oxazoline.
c) Phosphorhaltige Verbindungen, z. B.:
Aminsalze von Phosphorsäurepartialestern.
d) Schwefelhaltige Verbindungen, z. B.:
Barium-dinonylnaphthalin-sulfonate, Calciumpetroleum-sulfonate.

13. Viskositätsindex-Verbesserer:
Polymethacrylate, Vinylpyrrolidon/Methacrylat-Copolymere, Polybutene, Olefin-Copolymere, Styrol/Acrylat-Copolymere.

14. Stockpunktniedriger:
Polymethacrylat, alkylierte Naphthalinderivate.

15. Dispergiermittel/Tenside:
Polybutenylbernsteinsäure-imide, Polybutenylphosphonsäurederivate, basische Magnesium-, Calcium-, und Bariumsulfonate und -phenolate.

16. Verschleisschutz-Additive:
Schwefel und/oder Phosphor und/oder Halogen enthaltende Verbindungen, wie geschwefelte pflanzliche Öle, Zinkdialkyldithiophosphate, Tritolyl-phosphat, chlorierte Paraffine, Alkyl- und Aryldisulfide.
In den nachfolgenden Beispielen sind alle Prozente Gewichtsprozente.

## Herstellungsbeispiele

### Beispiel 1:

a) Herstellung von β-(3,5-Di-tert.butyl-4-hydroxy-phenyl)-propionsäureoleylester

292,4 g (1 Mol) β-(3,5-Di-tert.butyl-4-hydroxy-phenyl)-propionsäuremethylester und 383,6 g (1 Mol) Oleylalkohol werden in 50 ml Toluol vorgelegt und auf 120°C erhitzt, so dass das Toluol innerhalb einer Stunde abdestilliert. Anschliessend wird 2,5 g Lithiumamid zugegeben und das entstehende Methanol bei 80°C abdestilliert. Anschliessend wird auf 120°C erhitzt und diese Temperatur für 4 Stunden gehalten. Die Umsetzung wird dünnschichtchromatographisch kontrolliert. Nach Beendigung der Umsetzung wird das Reaktionsgemisch in 200 ml Toluol gelöst, mit 12 ml konz. HCl neutralisiert und anschliessend zweimal mit je 200 ml Wasser gewaschen.

Die organische Phase wird abgetrennt, über $Na_2SO_4$ getrocknet und am Rotationsverdampfer eingeengt. Der Rückstand wird bei 80°C am Hochvakuum getrocknet. Man erhält ein leicht gelbliches Öl (Ausbeute: 95 % d.Th.)

| Analyse: | C | H |
|---|---|---|
| berechnet | 79,49 | 11,44 |
| gefunden | 79,3 | 11,7 |

b) Umsetzung des Oleylesters mit Schwefel

100 g des in 1a) hergestellten Produktes werden mit 5 g Schwefel vermengt und auf 180°C aufgeheizt. Die Temperatur wird eine Stunde aufrecht erhalten. Anschliessend wird jede weitere Stunde 5 g Schwefel zugegeben, bis die Gesamtmenge an Schwefel 30 g beträgt. Die Reaktionsmischung wird nun weitere 6 Stunden bei 180°C ausreagieren gelassen. Anschliessend nimmt man den Rückstand in 150 ml Hexan auf, filtriert durch 10 g Tonsil ®AC und engt das Filtrat am Rotationsverdampfer ein. Der Rückstand wird für 2 Stunden bei 80°C im Hochvakuum getrocknet. Man erhält 110 g eines schwarzen Öls das 14,4 Gew.-% gebundenen Schwefel enthält.

Das 1H-NMR zeigt keine Resonanzen von -CH=CH- mehr. Im Massenspektrum findet man ein Bruchstück M+ = 592 (= Molmasse des Ausgangsproukts +2S).

### Beispiel 2:

30,88 g (0,1 Mol) 4-Allyl-2,6-di-tert.butyl-phenol und 1,6 g (0,05 Mol) Schwefel werden unter leichtem Stickstoffzustrom in einen 100 ml Sulfierkolben mit Thermometer und Rückflusskühler gegeben. Das Gemisch wird auf 140°C erwärmt und während 24 Stunden bei dieser Temperatur gehalten. Nach dieser Zeit zeigt das Dünnschichtchromatogramm (Laufmittel Hexan) keinen Schwefel mehr an. Das Reaktionsprodukt wird in 50 ml Toluol gelöst. Man erhält dabei eine dunkle, klare Lösung. Diese Lösung wird zweimal mit je 50 ml Wasser gewaschen, über 10 g $Na_2SO_4$ getrocknet, filtriert, im Rotationsverdampfer eingeengt und anschliessend 2 Stunden lang bei 80°C im Hochvakuum getrocknet.

Man erhält 28,5 g eines dunklen, hochviskosen Öles (Molgewicht: ~400; Schwefelgehalt: 5,2 %).

### Beispiele 3-6:

Man verfährt genauso wie in Beispiel 2, jedoch mit unterschiedlichen Mengen Schwefel.

Aus der nachfolgenden Tabelle 1 ist der Schwefelgehalt der Endprodukte ersichtlich.

**Tabelle 1**

| Beispiel Nr. | $S_2$-Gehalt (%) | Aussehen | Erweichungspunkt |
|---|---|---|---|
| Beispiel 3 | 11,0 | dunkles Harz | ~ 30°C |
| Beispiel 4 | 14,1 | dunkles Harz | ~ 30°C |
| Beispiel 5 | 2,7 | dunkles viskoses Öl | - |
| Beispiel 6 | 7,9 | dunkles Harz | ~ 30°C |

**Beispiel 7:**

31,8 g 2,5-Di-tert.butyl-4-[2-(allyloxycarbonyl)ethyl]-phenol und 1,7 g Schwefel (5 %) werden in 10 ml Dimethylformamid gegeben. Das Gemisch wird 18 Stunden lang auf 100°C und weitere 5 Stunden lang auf 140°C aufgeheizt. Nach dieser Zeit zeigt das Dünnschichtchromatogramm (Laufmittel Hexan: Toluol im Verhältnis 75 : 25) keinen Schwefel mehr an. Das Reaktionsprodukt wird in 100 ml Toluol gegeben. Diese Lösung wird wie in Beispiel 2 beschrieben aufgearbeitet. Man erhält 30,7 g eines schwarzen, viskosen Öles mit einem Schwefelgehalt von 4,8 %.

**Beispiel 8:**

Die Arbeitsweise von Beispiel 7 wird wiederholt, jedoch mit 10 % Schwefel.
Man erhält 34,8 g eines schwarzen, viskosen Öles mit einem Schwefelgehalt von 9,4 %.

**Anwendungsbeispiele**

**Beispiel 9:**

Öl Oxidationstest, Standard Version nach ASTM 2272 (Rotary Bomb Oxidation-Test).
Das gemäss Beispiel 1 hergestellte Gemisch wird gemäss ASTM 2272 in Mineralöl I*) [Viskosität 14,8 mm /s (100°C)] getestet. Der Versuch ist bei einem Druckabfall von 1,7 bar beendet. Die in der untenstehenden Tabelle 2 angegebenen Resultate bedeuten die Zeit (in Minuten) bis der angegebene Druckabfall eingetreten ist. Lange Zeiten entsprechen guter Stabilisatorwirksamkeit. Konzentration des Stabilisators: 0,5 % bezogen auf das Öl.

\>

**Tabelle 2**

| Stabilisator | Minuten bis Druckabfall von 1,7 bar |
|---|---|
| keiner | 25 |
| Gemisch gemäss Beispiel 1 | 207 |

*) Vom Gesamtkohlenstoffanteil des Öls entfallen 6,5 % auf aromatischen Kohlenstoff, 72 % auf paraffinischen Kohlenstoff und 21,5 % auf naphthalinischen Kohlenstoff. Das Öl enthält 0,54 % Schwefel.

**Beispiel 10:**

TOST-Test, Oxidation Charakteristika von Mobil 27-Oil (ASTM D 943/DIN 51587/IP 157).
Das zu testende Öl enthält 0,05 % Reocor ® 12 (Eisen-Korrosionsinhibitor) und wird in Gegenwart von Wasser, Sauerstoff, einem Eisen-kupferkatalysator und einem erfindungsgemässen Stabilisatorgemisch während 500 Stunden auf 95°C erwärmt. Danach wird der Säurewert (in mg KOH-Verbrauch pro g Testöl) sowie der Schlamm (in mg Rückstand pro Ansatz) bestimmt. Die Resultate sind in Tabelle 3 zusammengestellt.
Die Konzentration des Stabilisator-Gemisches beträgt jeweils 0,25 % bezogen auf das Öl.

**Tabelle 3**

| Stabilisator | 500 Stunden | |
|---|---|---|
| | Säurewert (mg KOH/g) | Schlamm (mg) |
| keiner | ⩾ 2,0 | ⩾ 5000 |
| Beispiel 1 | 0,18 | 52,0 |
| Beispiel 2 | 0,14 | 36 |
| Beispiel 3 | 0,12 | 51 |
| Beispiel 4 | 0,06 | 48 |

**Beispiel 11:**

TFOUT-Test (Thin-Film Oxygen Uptake Test)

Dieser Test ist eine modifizierte Version des "Rotary Bomb Oxidationstests für Mineralöle" (ASTM D 2272). Er wird genau beschrieben in "C.S. Ku und S.M. Hsu, A Thin-Film Oxygen Uptake Test for the Evaluation of Automotive Crankcase Lubricants, Lubrication Engineering, Vol. 40 (2), 75-83 (1984)". Als Testöl dient ein Motorenöl auf Mineralölbasis, welches die Hälfte der üblichen Menge an Zinkdithiophosphat (0,75 %; Zinkgehalt 0,06 %, bezogen auf das Motorenöl) enthält.

Die hergestellte Verbindung wird im beschriebenen Motorenöl in Gegenwart von 2 % Wasser, einer flüssigen oxidierten, nitrierten Fraktion eines Motorenbenzins als Katalysator (4 % Einsatzkonzentration), eines flüssigen Metallnaphthenates als weiterer Katalysator [4 % Einsatzkonzentration; Wasser und die beiden flüssigen Katalysatorsubstanzen sind unter der No. Standard Reference Material 1817 vom National Bureau of Standards (NBS) mit Analysen-Zertifikat geliefert worden] getestet. Der Versuch ist bei einem deutlichen Knick des Druck/Zeit-Diagramms beendet. Die in Tabelle 4 angegebenen Resultate bedeuten die Zeit (in Minuten) bis zum Knick des Druck/Zeit-Diagramms.

Lange Zeiten entsprechen guter Stabilisatorwirksamkeit. Konzentration des Stabilisators: 0 5 %, bezogen auf das Öl.

**Tabelle 4**

| Stabilisator | Minuten bis deutlicher Druckabfall |
|---|---|
| keiner | 76 |
| Beispiel 3 | 106 |
| Beispiel 4 | 115 |

**Beispiel 12:**

Es werden 2 erfindungsgemässe Schmierstoffzusammensetzungen nach der ASTM-Standard-Methode D 2783-81 (extreme pressure and wear lubricant test for oil and greases, fourball machine) unter Verwendung des Shell-Vierkugel-Apparates getestet.

**Tabelle 5**

| Basisöl | Verbindung | Konz. im Basisöl (%) | W.S.D. (mm) |
|---|---|---|---|
| Catenex | ohne Additiv | - | 0,9 |
| P 941 ® *) | Beispiel 1 | 1 % | 0,5 |
| | Beispiel 3 | 1 % | 0,45 |

*) Basisöl der Firma Shell

**Patentansprüche**

1. Stoffgemische erhältlich durch Umsetzung von elementarem Schwefel mit Verbindungen der Formel I

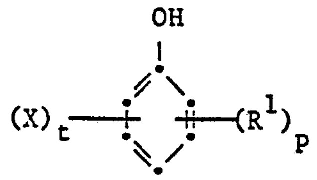 (I),

worin $R^1$ $C_1$-$C_{12}$Alkyl, $C_5$-$C_7$Cycloalkyl, Phenyl, 1- oder 2-Naphthyl, $C_7$-$C_9$Aralkyl oder $C_7$-$C_9$Alkaryl ist, t 1, 2 oder 3 ist, p 0, 1 oder 2 bedeutet, worin X eine der Gruppen

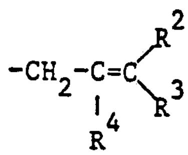 oder $-C_xH_{2x}-Y-R^5$

bedeutet, wobei $R^2$, $R^3$ und $R^4$ unabhängig voneinander Wasserstoff oder Methyl sind, worin x 0, 1, 2 oder 3 ist, Y -CO-O- oder -CO-NH-bedeutet, und worin $R^5$ ein Rest

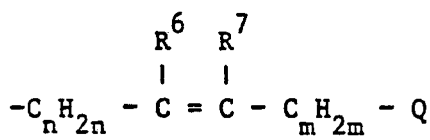

ist, worin n und m unabhängig voneinander die ganzzahligen Werte von 0 bis 14 annehmen können, $R^6$ und $R^7$ Wasserstoff oder $C_1$-$C_8$-Alkyl bedeuten, Q Wasserstoff, Methyl oder ein Rest

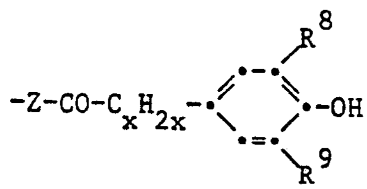

ist, Z -O- oder -NH- bedeutet und worin $R^8$ und $R^9$ unabhängig voneinander die Bedeutungen von $R^1$ besitzen oder Wasserstoff sind, wobei man 100 Gewichtsteile einer Verbindung der Formel I oder von Gemischen dieser Verbindungen mit 5 bis 1000 Gewichtsteilen elementarem Schwefel bei einer Reaktionstemperatur von 50°C bis 200°C umsetzt.

2. Stoffgemische gemäss Anspruch 1, worin X ein Rest

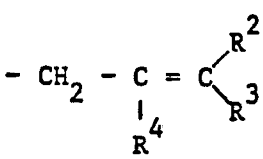

bedeutet.

3. Stoffgemische gemäss Anspruch 1, worin X ein Rest
$- C_xH_{2x} - Y - R^5$
bedeutet.

4. Stoffgemische gemäss Anspruch 1, worin $R^1$ verzweigtes $C_3$-$C_{12}$-Alkyl ist, p 1 oder 2 bedeutet, wobei sich $R^1$ jeweils in o-Position zur phenolischen Hydroxygruppe befindet, worin t 1 ist und X ein Rest

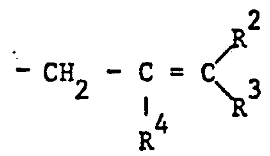

bedeutet, der sich in p-Position zur phenolischen Hydroxygruppe befindet.

5. Stoffgemische gemäss Anspruch 4, worin $R^1$ tert.Butyl ist p 2 bedeutet und X $-CH_2-CH = CH_2$ ist.

6. Stoffgemische gemäss Anspruch 1 worin $R^1$ verzweigtes $C_3$-$C_{12}$-Alkyl ist, p 1 oder 2 bedeutet, wobei $R^1$ sich jeweils in o-Position zur phenolischen Hydroxygruppe befindet, worin t 1 ist und X ein Rest $-C_xH_{2x}-Y-R^5$ bedeutet, der sich in p-Position zur phenolischen Hydroxygruppe befindet, worin x 2 ist, Y -CO-Oist und worin $R^5$ ein Rest

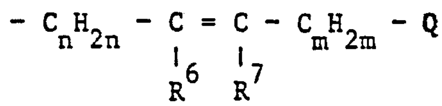

ist.

7. Stoffgemische gemäss Anspruch 6, worin $R^1$ tert. Butyl ist, p die Zahl 2, m die Zahl 7 und n die Zahl 8 bedeuten, $R^6$, $R^7$ und Q unabhängig voneinander für Wasserstoff oder Methyl stehen.

8. Stoffgemische gemäss Anspruch 7, worin $R^6$ und $R^7$ Wasserstoff und Q einen Rest

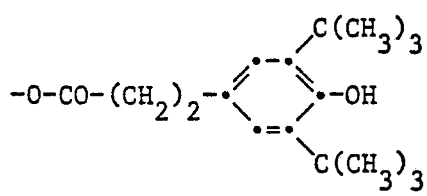

bedeuten.

9. Stoffgemische gemäss Anspruch 6, worin $R^1$ tert. Butyl ist, p die Zahl 2 und n die Zahl 1 bedeuten, m gleich 0 ist, und $R^6$, $R^7$ und Q für Wasserstoff stehen.

10. Verfahren zur Herstellung von Stoffgemischen gemäss Anspruch 1, dadurch gekennzeichnet, dass man 100 Gewichtsteile einer Verbindung der Formel I oder von Gemischen dieser Verbindungen mit 5 bis 1000 Gewichtsteilen elementarem Schwefel in An- oder Abwesenheit eines organischen Lösungsmittels und gegebenenfalls einer Base umsetzt, wobei die Reaktionstemperatur zwischen 50°C und 200°C beträgt.

11. Zusammensetzungen enthaltend ein gegen thermischen, oxidativen oder strahlungsinduzierten Abbau empfindliches organisches Material und ein Stoffgemisch gemäss Anspruch 1.

12. Verwendung der Stoffgemische gemäss Anspruch 1 als Antioxidantien in organischem Material gegen dessen Schädigung durch Einwirkung von Sauerstoff, Wärme, Licht oder energiereicher Strahlung.

**Claims**

1. A mixture of substances obtainable by reacting elementary sulfur with compounds of the formula I

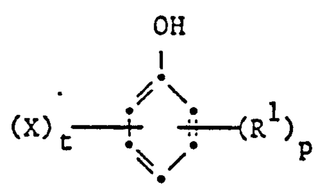

in which $R^1$ is $C_1$-$C_{12}$-alkyl, $C_5$-$C_7$-cycloalkyl, phenyl, 1-naphthyl, 2-naphthyl, $C_7$-$C_9$-aralkyl or $C_7$-$C_9$-alkaryl, t is 1, 2 or 3, p is 0, 1 or 2 and X is one of the groups

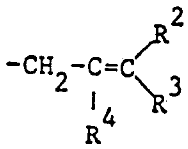

or

$-C_xH_{2x}-Y-R^5$

in which $R^2$, $R^3$ and $R^4$ independently of one another are hydrogen or methyl, x is 0, 1, 2 or 3, Y is -CO-0- or -CO-NH and $R^5$ is a radical

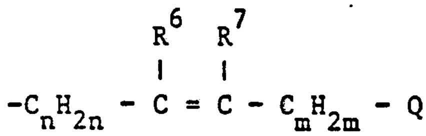

in which n and m independently of one another can assume integral values from 0 to 14, $R^6$ and $R^7$ are hydrogen or $C_1$-$C_8$-alkyl, and Q is hydrogen, methyl or a radical

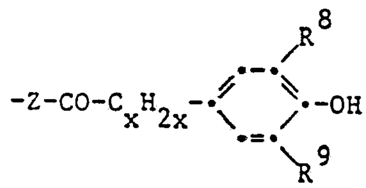

in which Z is -O- or -NH- and $R^8$ and $R^9$ independently of one another are as defined for $R^1$ or are hydrogen, 100 parts by weight of a compound of the formula I or of mixtures of these compounds being reacted with 5 to 1000 parts by weight of elementary sulfur at a reaction temperature of 50°C to 200°C.

2. A mixture of substances according to Claim 1, in which X is a radical

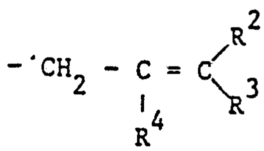

3. A mixture of substances according to Claim 1, in which X is a radical
$-C_xH_{2x} - Y - R^5$

4. A mixture of substances according to Claim 1, in which $R^1$ is branched $C_3$-$C_{12}$alkyl, p is 1 or 2, $R^1$ being located in each case in the o-position relative to the phenolic hydroxyl group, and t is 1 and X is a radical

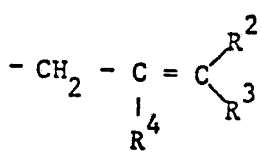

which is located in the p-position relative to the phenolic hydroxyl group.

5. A mixture of substances according to Claim 4, in which $R^1$ is tert.-butyl, p is 2 and X is $-CH_2-CH=CH_2$.

6. A mixture of substances according to Claim 1, wherein $R^1$ is branched $C_3$-$C_{12}$-alkyl, p is 1 or 2, $R^1$ being located in each case in the o-position relative to the phenolic hydroxyl group, and t is 1 and X is a radical $-C_xH_{2x}-Y-R^5$ which is located in the p-position relative to the phenolic hydroxyl group and in which x is 2, Y is -CO-0- and $R^5$ is a radical

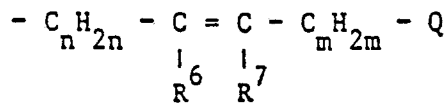

7. A mixture of substances according to Claim 6, in which $R^1$ is tert.-butyl, p is the number 2, m is the number 7 and n is the number 8 and $R^6$, $R^7$ and Q independently of one another are hydrogen or methyl.

8. A mixture of substances according to Claim 7, in which $R^6$ and $R^7$ are hydrogen and Q is a radical

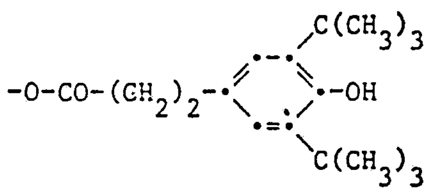

9. A mixture of substances according to Claim 6, in which $R^1$ is tert.-butyl, p is the number 2 and n is the number 1, m is 0 and $R^6$, $R^7$ and Q are hydrogen.

10. A process for the preparation of a mixture of substances according to Claim 1, wherein 100 parts by weight of a compound of the formula I or of mixtures of these compounds are reacted with 5 to 1000 parts by weight of elementary sulfur in the presence or absence of an organic solvent and, if appropriate, a base, the reaction temperature being between 50°C and 200°C

11. A composition containing an organic material which is sensitive to thermal, oxidative or radiation-induced degradation and a mixture of substances according to Claim 1.

12. The use of a mixture of substances according to Claim 1 as an antioxidant in organic material to protect the latter against damage caused by the action of oxygen, heat, light or high-energy radiation.

## Revendications

1. Mélanges que l'on peut obtenir en faisant réagir du soufre élémentaire avec des composés répondant à la formule I:

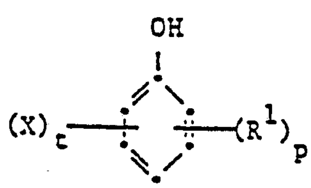

(I)

dans laquelle:

$R^1$ représente un alkyle en $C_1$-$C_{12}$, un cycloalkyle en $C_5$-$C_7$, un phényle, un naphtyle-1 ou -2, un aralkyle en $C_7$-$C_9$ ou un alkylaryle en $C_7$-$C_9$,

t désigne un nombre égal à 1, à 2 ou à 3,

p désigne un nombre égal à 0, à 1 ou à 2 et

X représente un radical répondant à l'une des formules suivantes:

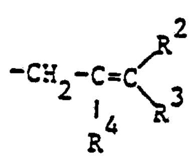

et $-C_xH_{2x}-Y-R^5$

dans lesquelles $R^2$, $R^3$ et $R^4$ représentent chacun, indépendamment les uns des autres, l'hydrogène ou un méthyle, x est égal à 0, à 1, à 2 ou à 3, Y représente -CO-0- ou -CO-NH-, et $R^5$ représente un radical:

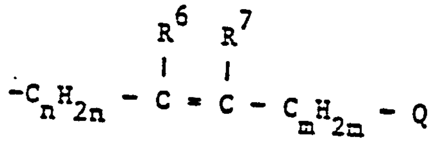

dans lequel n et m représentent chacun, indépendamment l'un de l'autre, un nombre entier de 0 à 14, $R^6$ et $R^7$ représentent chacun l'hydrogène ou un alkyle en $C_1$-$C_8$, et Q représente l'hydrogène, un méthyle ou un radical:

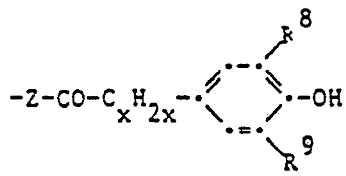

où Z représente -O- ou -NH-, et $R^8$ et $R^9$, indépendamment l'un de l'autre, ont chacun l'une des significations qui ont été données pour $R^1$ ou représentent chacun l'hydrogène, plus précisément en faisant réagir 100 parties en poids d'un composé de formule I, ou de mélanges de ces composés, avec de 5 à 1 000 parties en poids de soufre élémentaire, à une température réactionnelle de 50 à 200° C.

2. Mélanges selon la revendication 1 caractérisés en ce que X représente un radical:

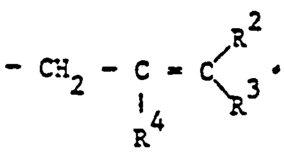

3. Mélanges selon la revendication 1 caractérisés en ce que X représente un radical: $-C_xH_{2x}$ - Y - $R^5$

4. Mélanges selon la revendication 1 caractérisés en ce que $R^1$ représente un alkyle ramifié en $C_3$-$C_{12}$, p désigne le nombre 1 ou le nombre 2, le substituant $R^1$ ou chacun des substituants $R^1$ étant en position ortho par rapport au radical hydroxy phénolique, t est égal à 1 et X représente un radical:

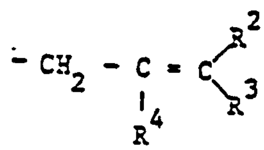

qui se trouve en position para relativement au radical hydroxy phénolique.

5. Mélanges selon la revendication 4 caractérisés en ce que $R^1$ représente un radical tert-butyle, p est égal à 2 et X représente un radical $-CH_2-CH=CH_2$.

6. Mélanges selon la revendication 1 caractérisés en ce que $R^1$ représente un alkyle ramifié en $C_3$-$C_{12}$, p est egal à 1 ou a 2, le substituant $R^1$ ou chacun des substituants $R^1$ se trouvant en position ortho relativement au radical hydroxy phénolique, t est égal à 1 et X représente un radical $-C_xH_{2x}$ -Y-$R^5$ qui occupe la position para relativement au radical hydroxy phénolique, l'indice x étant égal a 2, Y représentant un radical -CO-0- et $R^5$ un radical:

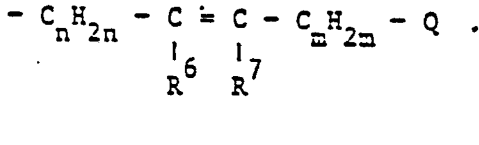

7. Mélanges selon la revendication 6 caractérisés en ce que $R^1$ représente un radical tert-butyle, p est egal à 2, m est égal à 7, n est égal à 8, et $R^6$, $R^7$ et Q représentent chacun, indépendamment les uns des autres, l'hydrogène ou un méthyle.

8. Mélanges selon la revendication 7 caractérisés en ce que $R^6$ et $R^7$ représentent chacun l'hydrogène et Q représente un radical:

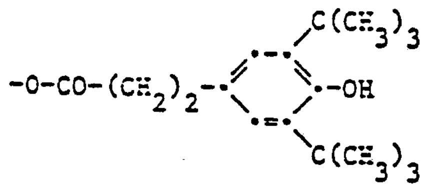

9. Mélanges selon la revendication 6 caractérisés en ce que $R^1$ représente un radical tert-butyle, p le nombre 2, n le nombre 1, m le nombre 0, et $R^6$, $R^7$ et Q représentent chacun l'hydrogène.

10. Procédé de préparation de mélanges selon la revendication 1, procédé caractérisé en ce qu'on fait réagir 100 parties en poids d'un composé de formule I, ou d'un mélange de tels composés, avec de 5 à 1 000 parties en poids de soufre élémentaire, en présence ou non d'un solvant organique et, éventuellement, d'une base, à une température comprise entre 50 et 200° C.

11. Compositions qui contiennent une matière organique sensible à la dégradation sous l'effet de la chaleur, de l'oxydation ou d'un rayonnement, et un mélange selon la revendication 1.

12. Application des mélanges selon la revendication 1 comme anti-oxydants dans une matière organique contre la dégradation de celle-ci sous l'action de l'oxygène, de la chaleur, de la lumière ou d'un rayonnement de haute energie.